Europäisches Patentamt

European Patent Office

Office européen des brevets

(11) Publication number: **0 484 945 A2**

# EUROPEAN PATENT APPLICATION

(21) Application number: **91118996.7**

(22) Date of filing: **07.11.91**

(30) Priority: **08.11.90 JP 303435/90**

(43) Date of publication of application:
**13.05.92 Bulletin 92/20**

(84) Designated Contracting States:
**DE FR NL**

(51) Int. Cl.⁵: **G11B 11/10**

(71) Applicant: **NEC CORPORATION**
**7-1, Shiba 5-chome Minato-ku**
**Tokyo 108-01(JP)**

(72) Inventor: **Toki, Kaoru, c/o NEC Corporation**
**7-1, Shiba 5-chome**
**Minato-ku, Tokyo(JP)**
Inventor: **Kariyada, Eiji, c/o NEC Corporation**
**7-1, Shiba 5-chome**
**Minato-ku, Tokyo(JP)**

(74) Representative: **Vossius & Partner**
**Siebertstrasse 4 P.O. Box 86 07 67**
**W-8000 München 86(DE)**

(54) **Magneto-optical recording medium.**

(57) Disclosed is a magneto-optical medium having films formed on a support (1) in the order of a first dielectric material layer, (2) an amorphous magnetic alloy film layer (3) made of a combination of a rare earth metal and an iron group transition metal, a second dielectric material layer (4) and a metal reflective layer, (5) wherein the metal reflective layer comprises a two-layer film (6,7) having further a second metal layer film formed on an Al based metal reflective layer comprising Al or an Al alloy, the second metal layer film comprising a metal with lower thermal conductivity than the Al based metal.

The magneto-optical recording medium of the present invention has the effects of high recording sensitivity, excellent corrosion resistance and high reliability.

Fig. 1

This invention relates to a magneto-optical recording medium, particularly to a magneto-optical recording medium to be used for magneto-optical disks.

Optical disks are attracting attention as one of large capacity file memories. Above all, magneto-optical memory disks have the advantage that the recorded information is rewritable, and therefore wide scope of applications, typically code data file memory, and also image file memory, etc. have been actively studied in various places.

As the magneto-optical recording medium, there has been known a three-layer structure having films formed on a resin substrate such as polycarbonate, etc. in the order of a first dielectric material layer comprising SiN, a recording layer comprising an amorphous magnetic alloy film such as TbFeCo made of a combination of a rare earth metal and an iron group transition metal and a second dielectric material layer comprising SiN.

In recent years, a four-layer structure having further a metal reflective layer formed on the second dielectric material layer has been also proposed with a view to improving recording and reproduction efficiency.

These magneto-optical disks are already on the level of practical application, typically in the field of code data file memory of personal computer, and increase in uses has been expected. With the expansion of uses, still higher recording and reproduction performances and high reliability which guarantee stable performance even under severe environment have been demanded.

In the magneto-optical recording media of the prior art, as disclosed in Japanese Unexamined Patent Publication No. 183449/1990, one using Al or an Al alloy containing a minute amount (several wt.%) of added metal as the metal reflective layer has been proposed.

However, when Al or an Al alloy containing a minute amount of added metal is used as the metal reflective layer in such magneto-optical recording medium of the prior art as described above, the recording sensitivity will be lowered to great extent because of its high thermal conductivity. Since such lowering of recording sensitivity is more marked as the metal reflective layer is thicker, it is required to be made as thin as possible, but if it is made too thin, there are such problems that the reflectance is lowered and that corrosion is liable to occur under high temperature and high humidity environment.

An object of the present invention is to provide a recording medium having high recording sensitivity and excellent reliability by forming a metal layer having relatively lower thermal conductivity and excellent corrosion resistance on an Al based metal reflective layer of the prior art having high thermal conductivity.

The magneto-optical recording medium of the present invention is a magneto-optical recording medium having films formed on a substrate in the order of a first dielectric material layer, an amorphous magnetic alloy film layer made of a combination of a rare earth metal and an iron group transition metal, a second dielectric material layer and a metal reflective layer, wherein the metal reflective layer is composed of a two-layer film having further a second metal layer film formed on an Al based metal reflective layer comprising Al or an Al alloy, said second metal layer film comprising a metal with lower thermal conductivity than said Al based metal.

Further, the magneto-optical recording medium is constituted such that the above metal with lower thermal conductivity than the Al based metal is either one of Ti, Ta, Cr and Pt or an alloy of these.

## BRIEF DESCRIPTION OF THE DRAWINGS

Fig. 1 is a sectional view showing an embodiment of the present invention;

Fig. 2 is a drawing for illustration of the relationship showing comparison of the relationship of powers between the embodiment shown in Fig. 1 and CNR of the prior art; and

Fig. 3 is a sectional view showing another embodiment of the present invention.

## DESCRIPTION OF THE PREFERRED EMBODIMENTS

Referring now to the drawing, the embodiments of the present invention is described.

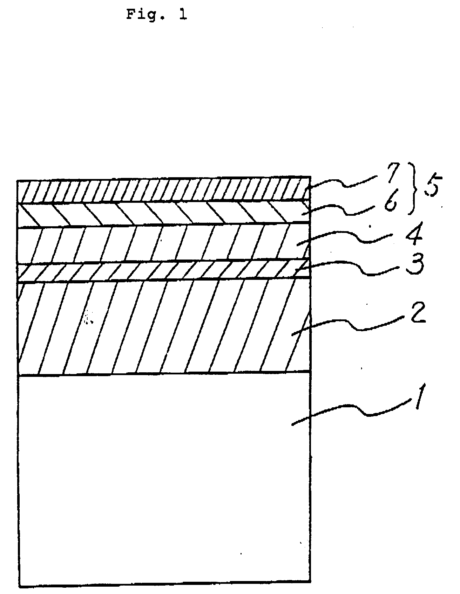

Fig. 1 is a sectional view showing an embodiment of the present invention, and the magneto-optical recording medium shown in Fig. 1 having films formed preferably on a substrate 1 (support) in the order of a dielectric material layer 2 with a thickness of 1100 Å comprising SiN, a recording layer 3 with a thickness of 200 Å comprising TbFeCo, a dielectric material layer 4 with a thickness of 400 Å comprising SiN and a metal reflective layer 5 on a polycarbonate substrate with a thickness of 1.2 mm and a diameter of 130 mm.

Here, the metal reflective layer 5 comprises a two-layer film comprising a reflective layer 6 with a thickness of 300 Å comprising an AlTi alloy and further a metal layer 7 with a thickness of 200 Å comprising Ti laminated in this order.

The respective layers as mentioned above are prepared as described below.

The dielectric material layers 3, 5 comprising SiN films are prepared by reactive sputtering using Si target and a gas mixture of Ar and $N_2$ (50% $N_2$) as the sputtering gas under a power density of 8 $w/cm^2$ and a sputtering gas pressure of $2.5 \times 10^{-1}$ Pa.

On the other hand, the recording layer 4 with a thickness of 700 Å comprising TbFeCo is prepared by two-source DC magnetron sputtering using Tb target and FeCo target, while rotating the substrate, under an Ar gas pressure of 0.08 Pa, and the respective power densities of the Tb target and the FeCo target of 1.5 $w/cm^2$ and 3.0 $w/cm^2$. The Curie temperature and the Kerr rotation angle (laser wavelength 830 nm) of the recording film are 200°C and 0.38 degree, respectively.

The reflective layer 6 comprising the AlTi alloy film and the metal layer 7 comprising the Ti film are prepared by RF or DC magnetron sputtering method using an AlTi alloy (Ti: 1 wt.%) target and a Ti target.

In this process, the AlTi alloy film and the Ti film were both prepared by RF magnetron sputtering method under an Ar gas pressure of 0.12 Pa and a power density of 4 $w/cm^2$.

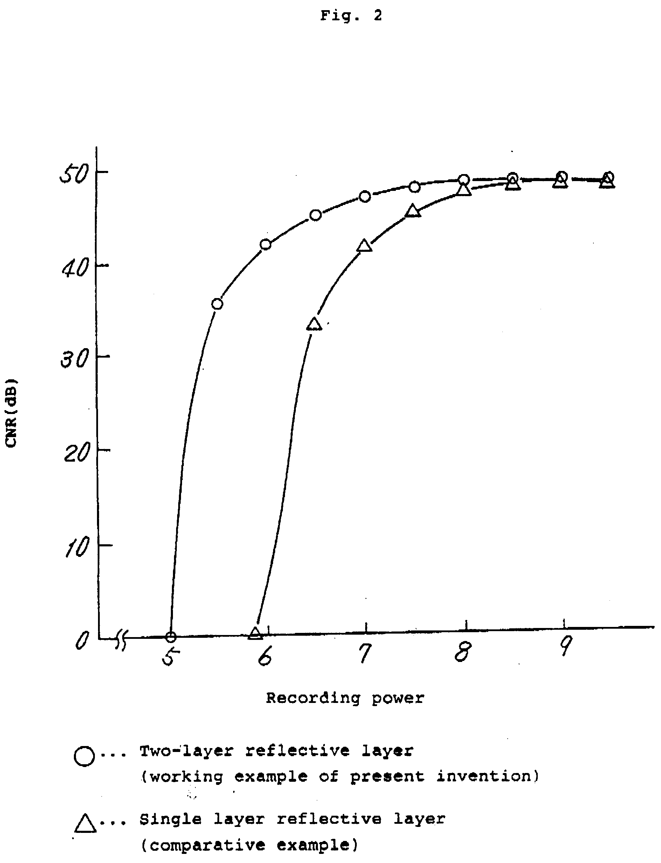

For the magneto-optical recording medium, the relationship between the recording power and CNR (carrier to noise ratio) is shown in Fig. 2.

The present measurements were practiced, by use of a PIN-differential optical system having an objective lens with NA 0.5, with a wind velocity of 9.4 m/s, (disk rotational number 3000 rpm, radium 30 mm), recording frequency 5.2 MHz, recording pulse width 50 ns, bias magnetic field 200 Oe and reproduction power 1 mW.

In the same Figure, as Comparative example, the result is also shown in the case of the single metal reflective layer of the prior art wherein the metal reflective layer comprises an AlTi film with a thickness of 500 Å. Although the saturated values of CNR are all 48 dB and there is no substantial difference between the prior art layer and the present layer, the threshold recording power is 5 mW in the embodiment having the two-layer reflective film, which is understood to be lower as compared with 6 mW in the Comparative example having the single layer reflective film of the prior art (higher in recording density). On the other hand, reflectances were both 15%. Thus, by use of the two-layer reflective film constitution, higher sensitivity can be achieved without changing CNR and reflectance. This is due to effective utilization of the fact that the thermal conductivity of Ti used as the metal layer (about 0.22 w/cm•deg) is by far smaller than that (about 2.35 w/cm•deg) of the AlTi alloy.

Also, after the above two sheets of media were closely plastered together, environmental tests were conducted under the temperature and humidity conditions of 80°C and 90% RH for 500 hours. Error rates and recording reproduction characteristics before and after the test were measured. As the result, no deterioration was observed at all.

Further, when Ta, Cr, Pt or an alloy thereof with smaller thermal conductivity and higher corrosion resistance than the Al based metal comprising Al or an Al alloy was used as the metal layer in place of Ti, substantially the same effects were obtained.

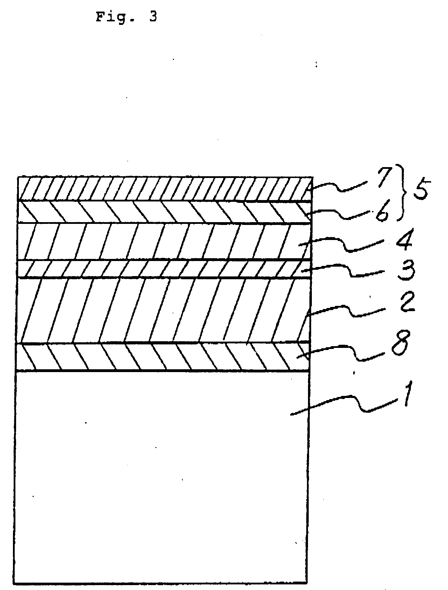

Finally, the present invention, as shown in Fig. 3, can be of course applied to the medium structure having an under-layer 8 provided for strengthening the film adhesive force of the first dielectric material layer such as Ta oxide (TaO2).

The magneto-optical recording medium of the present invention has the effects of high recording sensitivity, excellent corrosion resistance and high reliability.

## Claims

1. A magneto-optical recording medium having films formed on a substrate in the order of a first dielectric material layer, an amorphous magnetic alloy film layer made of a combination of a rare earth metal and an iron group transition metal, a second dielectric material layer and a metal reflective layer, wherein the metal reflective layer comprises a two-layer film having further a second metal layer film formed on an Al based metal reflective layer comprising Al or an Al alloy, said second metal layer film comprising a metal with lower thermal conductivity than said Al based metal.

2. A magneto-optical recording medium according to Claim 1, wherein the above metal with lower thermal conductivity than the Al based metal is either one of Ti, Ta, Cr and Pt or an alloy of these.

EP 0 484 945 A2

Fig. 1

4

Fig. 2

$\bigcirc$... Two-layer reflective layer
(working example of present invention)

$\triangle$... Single layer reflective layer
(comparative example)

Fig. 3